# EUROPEAN PATENT APPLICATION

(11) **EP 1 349 408 A2**
(43) Date of publication of application: **01.10.2003**
(21) Application number: 03100101.9
(22) Date of filing: 20.01.2003
(51) Int. Cl.: H04Q 7/36

(54) **Communication system and method**

(30) Priority: 28.03.2002 GB 0207339
(71) Applicant: MOTOROLA, INC., Schaumburg, IL 60196 (US)
(72) Inventor: Petersen, Steen, 2600 Glostrup (DK)
(74) Representative: McCormack, Derek James

(57) **Abstract**

Status report messages are obtained for the wireless serving communication units (122-132) and processed by a management control function (146). A coverage-based topology map generating function (159) combines operational status information of said number of wireless serving communication units (122-132) with coverage information of said wireless serving communication units (122-132) to generate a composite coverage-based topology map. The coverage-based topology map generating function (159) forms part of a management control function (146) and is operably coupled to a fault management application (157) for providing wireless serving communication unit fault data as part of the status information of said number of wireless serving communication units (122-132).

## Description

### Field of the Invention

This invention relates to a communication system and method. In particular, it relates to wireless communication systems and particularly network management of wireless communication systems. The invention is applicable to, but not limited to, the generation of a dynamic coverage-based topology map for a wireless cell-based communication system.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

In a wireless communication system, each BTS has associated with it a particular geographical coverage area (or cell). Transmit power and receiver sensitivity of both the BTS and the plurality of MS define the coverage area where the BTS can maintain acceptable communications with MSs operating within its serving cell. Often these cells combine to produce an extensive coverage area.

Radio coverage prediction is one of the most challenging and time consuming task in designing a mobile communication network. Effective usage of the frequency spectrum, one of the scarcest resources for any operator, leads to both better communication network quality and increased capacity.

The control hub of cellular-based communication systems, such as Global System for Mobile communications (GSM) and TErrestrial Trunked RAdio (TETRA) systems, is known as the Operations and Management Controller (OMC). The OMC includes a substantial amount of network management functionality, which monitors and controls the various functions and communications within the network.

In the field of this invention, it is known that a fault management application typically exists as part of the network management system. The fault management application provides, inter-alia, indications of failures of specific BTSs within the wireless communication system. Clearly, any operational loss of a BTS, or indeed reduction in transmit power or receiver sensitivity of a BTS, results in a reduction of the actual coverage of the wireless communication system.

However, the impact on the overall 'system' coverage, when there is a BTS failure or indeed reduction in transmit power or receiver sensitivity, is not understood by the OMC. This is due to many factors, including:
(i) The complexity of coverage prediction in cellular-based systems, where there is inherently a large degree of coverage overlap between adjacent cells, in order to obtain blanket radio coverage;
(ii) The various communication formats and modes/types of communication being supported by the respective BTS, for example various trunking modes of operation including: wide-area, site, transmission, quasi-transmission, no trunking etc. all of which impact the coverage area of the BTS; and
(iii) The continuously changing radio propagation characteristics of each cell.

When such a loss (or reduction) of coverage occurs, the only known technique to determine the effect on the overall system coverage is to subsequently perform a series of field measurements. This is a very time consuming task and, if followed, usually occurs many days/weeks after the BTS has failed. The typical solution is to repair or replace the BTS and accept the degradation in system coverage during the BTS outage.

However, the field measurement approach has a number of disadvantages. It is unacceptable to both the user and the network operator, as there is a long delay in identifying and rectifying the problem. The network operator needs to be aware of the failure as soon as possible, and the consequences of the failure, so that a contingency plan can be implemented. However, no current mechanism exists to determine the real-time coverage change in a wireless communication system, when there is a BTS failure, based on the current faults of the base sites and the knowledge of the coverage of the base sites.

A need therefore exists for an improved coverage analysis mechanism, particularly when there is a BTS failure, wherein the abovementioned disadvantages may be alleviated.

### Summary of Invention

In accordance with a first aspect of the present invention there is provided a wireless cell-based communication system. The wireless cell-based communication system comprises a plurality of wireless serving communication units providing communication in respective overlapping coverage areas. The plurality of wireless serving communication units are operably coupled by a management control function. A coverage-based topology map generating function is operably coupled to a fault management application for providing wireless serving communication unit fault data as part of the status information of said number of wireless serving communication units. Status report messages are obtained for a number of the wireless serving communication units and processed by the management control function. The coverage-based topology map generating function combines operational status information of the number of wireless serving communication units with coverage information of the wireless serving communication units to generate a composite coverage-based topology map. Preferably, the composite coverage-based topology map is presented to a network operator in a substantially real-time manner so that a determination can be made as to the operational status of the system with respect to coverage.

In accordance with a second aspect of the present invention there is provided a method for generating a composite coverage-based topology map of a wireless cell-based communication system. The wireless communication system includes a plurality of wireless serving communication units providing communication in respective overlapping coverage areas. The method includes the steps of locating a number of the wireless serving communication units on a geographical map and overlaying a number of respective coverage maps associated with the wireless serving communication units. A number of the respective coverage maps are adapted according to status information obtained from said wireless serving communication units to generate the composite coverage-based topology map.

In accordance with a third aspect of the present invention, there is provided a storage medium storing composite coverage-based topology map software.

In accordance with a fourth aspect of the present invention, there is provided a composite coverage-based topology map generation application for use in a wireless cell-based communication system. The composite coverage-based topology map generation application combines operational status information of a number of wireless serving communication units with coverage information of the wireless serving communication units to generate a composite coverage-based topology map.

Further features of the invention are defined in in the dependent claims.

In summary, the inventive concepts described herein provide at least a mechanism to incorporate real-time BTS status information in a coverage prediction tool and/or network management application, to determine dynamically the impact on system coverage due to changes in the operation (particularly failures) of BTSs.

Exemplary embodiments of the present invention will now be described, with reference to the accompanying drawings, in which:

### Brief description of the drawings

FIG. 1 is a schematic block diagram of a trunked radio communications system that has been adapted to support the various inventive concepts of a preferred embodiment of the present invention;
FIG. 2 is a flowchart of a method of operation of a trunked radio communication system adapted to support the various inventive concepts of the preferred embodiment of the present invention; and
FIG. 3 is an illustration of a map showing a pictorial representation of a cell-based wireless communication system indicating the benefits associated with a preferred embodiment of the present invention.

### Description of Preferred Embodiments

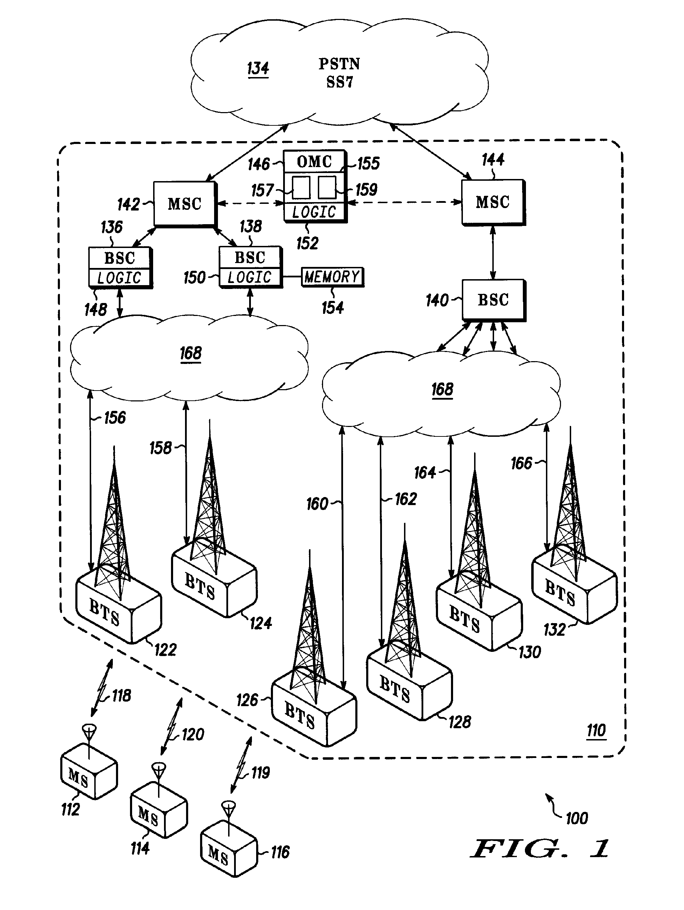

Referring first to FIG. 1, a trunked radio communications system 100, supporting a TErrestrial Trunked RAdio (TETRA) air-interface, is shown in outline, in accordance with a preferred embodiment of the invention. The European Telecommunications Standards Institute (ETSI) has defined the TETRA air-interface. Generally, the air-interface protocol is administered from base transceiver sites that are geographically spaced apart - one base site supporting a cell (or, for example, sectors of a cell).

A plurality of subscriber units, such as a mixture of MSs 112-116 and fixed terminals (not shown), communicate over the selected air-interface 118-120 with a plurality of base transceiver stations (BTS) 122-132. A limited number of MSs 112-116 and BTSs 122-132 are shown for clarity purposes only.

The system infrastructure in a TETRA system is generally referred to as a switching and management infrastructure (SwMI) 110, which substantially contains all of the system elements apart from the mobile units. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween, with BSCs 136-140 responsible for establishing and maintaining control channel and traffic channels to serviceable MSs 112-116 affiliated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory 154 (shown only in relation to BSC 138 for the sake of clarity). The memory typically stores historically compiled operational data as well as in-call data, system information and control algorithms.

The OMC 146 includes a network management application 155, a subset of which is a fault management application 157. In an alternative embodiment of the present invention, it is envisaged that a third party may provide the fault management application 157, and operably coupled (hooked) to the network management application 155 as an additional software and/or hardware application/function.

In the preferred embodiment of the present invention, the network management application 155 in the OMC 146 has been adapted to incorporate a coverage-based topology map generating function (159). More generally, the adaption to the network management application 155 may be incorporated in the OMC 146 in any suitable manner. For example, a new microprocessor may be incorporated into the OMC 146, where the microprocessor may include the coverage-based topology map generating function (159).

Alternatively a new memory element, storing inter-alia such coverage-based topology map generation software may be used to replace the existing memory element.

In a yet further alternative embodiment, an existing microprocessor or digital signal processor may be adapted to facilitate the coverage-based topology map generation. It is envisaged that such re-programming may be effected by any suitable means, for example using an RS232 or USB communication link, as known in the art.

As such, the required adaptation of a processing operation, and/or incorporation of new coverage-based topology map generation software may be employed in the form of processor-implementable instructions or data stored on a storage medium, such as a floppy disk, hard disk, PROM, RAM or any combination of these or other storage multimedia.

Furthermore, the following information is provided to the coverage-based topology map generating function (159) in the OMC 146, in order to generate a composite coverage-based topology map:
(i) Coverage information (in electronic form) about each individual BTS in the wireless communication system. This information is generally available as maps generated by the initial coverage prediction tool(s) used in designing the communication system;
(ii) Information about the geographical location of each BTS. This information is also generally available from the initial coverage prediction tool(s) used in designing the communication system.
(iii) A ground map of the area covered by the radio system, obtainable from a wide variety of sources, for example Ordnance Survey maps.
(iv) Real time information about the operational status of all BTS, for example whether their operational mode is wide trunking (part of the full coverage), site trunking (local coverage only), or no trunking, including any known faults identified by the fault management application 157.

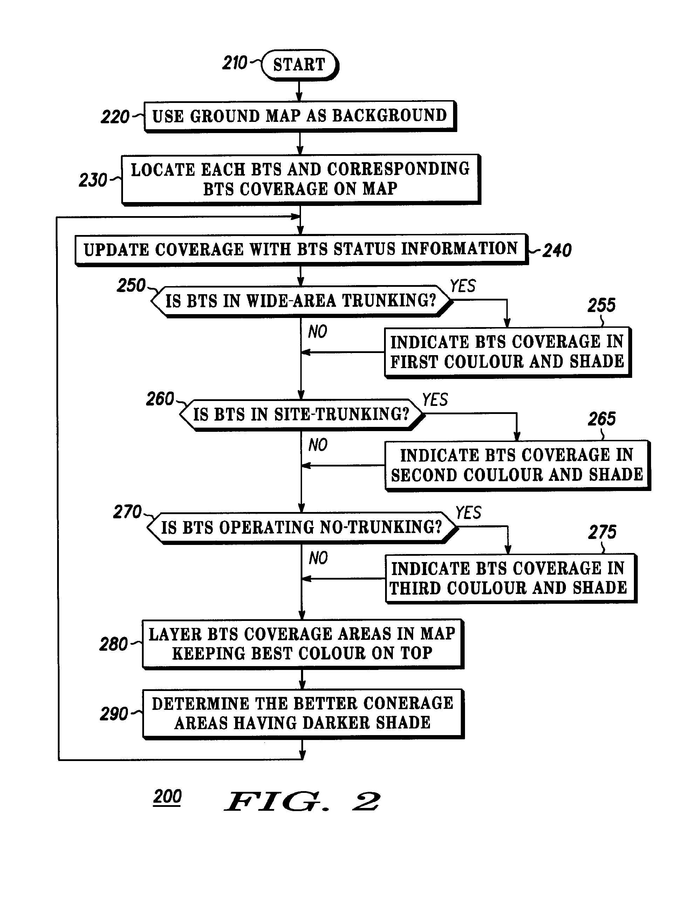

Referring now to FIG. 2, a flowchart 200 illustrates the inventive concepts of the present invention in greater detail. The method starts at step 210. Preferably, a graphical user interface is used, and the 'ground' map is used as a base layer (background) in the generation of a composite coverage-based map, as shown in step 220.

The location of each BTS in the wireless communication system 100 is overlaid on the composite coverage map together with any known coverage map corresponding to the respective BTS, as in step 230. The coverage information related to the respective BTSs is adapted based on regular BTS status information updates, as shown in step 240.

If a BTS is supporting a wide-area trunking mode of operation, in step 250, then its entire coverage is indicated in a particular first colour and/or shade, for example a shade of green, as in step 255. If a particular BTS is operating in a site-trunking mode of operation, in step 260, instead of a wide-area trunking mode of operation in step 255, then the colour of that particular BTS coverage area is set to a second colour, say a shade of yellow, in step 265. For example, if a BTS switches from a wide-area trunking mode of operation, indicated by a shade of green in step 255, to a site-trunking mode of operation, the BTS coverage area in the composite map, switches from a shade of green to a shade of yellow.

If a BTS site is in a no-trunking mode of operation in step 270, then the colour of that particular BTS coverage area is set to a third colour, say, a shade of red, in step 275.

It is within the contemplation of the invention that additional modes of operation may be used that corresponds to further colours or shades.

In the preferred embodiment of the present invention, the layering of coverage areas in the composite coverage map, always keeps the 'best' colour (representing the best coverage area) on top of the map, as shown in step 280.

In the preferred embodiment of the present invention, different shades of a particular colour, when spread across a number of BTS coverage areas, indicate the variation in BTS coverage for BTS's operating in the same mode of operation. In this manner, a darker shade may be configured to indicate a better coverage than a lighter shade.

In the preferred embodiment of the present invention, the coverage area indications for the respective BTS maps are transparent. In this manner, respective shades and colours of BTS maps, when overlaid to generate a composite coverage-based map, reflect the 'true' system coverage at any particular location.

Alternatively, it is within the contemplation of the invention that the layers are transparent, but only the colour of the top layer is shown. In this way, it is possible for the network operation to see the outline of lower layers, but the colour of the top layer is not affected. A benefit of using a composite of transparent layers is that it is possible to see the map in the background.

A further alternative is that if the network operator wishes to see the coverage of one of the lower layers, it is envisaged that the operator is provided with an option to temporarily move a lower layer to become the top layer.

In a yet further alternative embodiment, the composite coverage-based map may also indicate the better coverage areas within shades of particular colours.

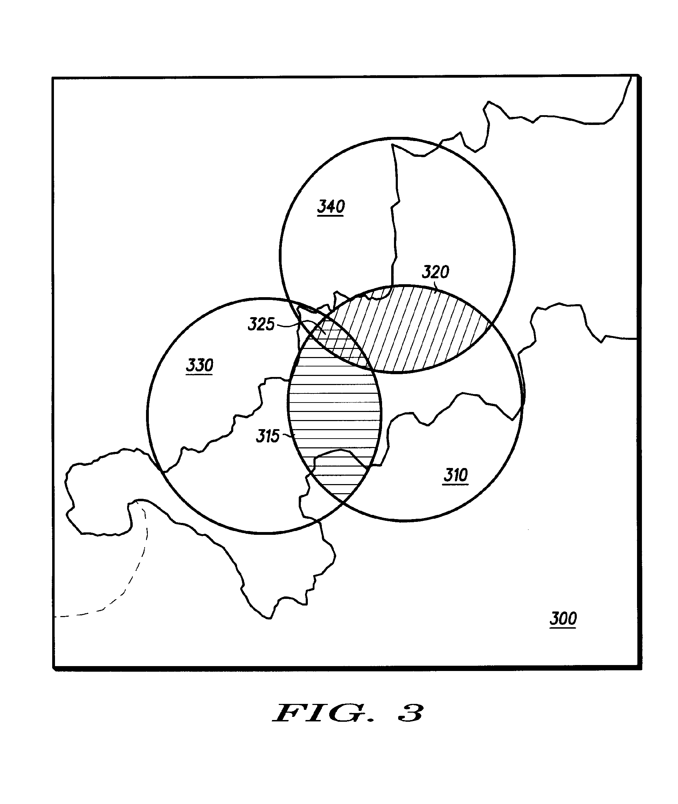

In particular, referring now to the composite topology map 300 illustrated in FIG. 3, let us consider the impact of real-time status information on the respective coverage areas.

Three BTS are shown serving coverage areas 310, 330 and 340. A first overlapping coverage area 315 exists covering a region where a wireless communication unit may be supported in its communications by either a BTS supporting area 310 or a BTS supporting area 330. A second overlapping coverage area 320 exists covering a region where a wireless communication unit may be supported in its communications by either a BTS supporting area 310 or a BTS supporting area 340. In addition, a third overlapping coverage area 325 exists covering a region where a wireless communication unit may be supported in its communications by any of the three BTSs.

The additional layers of colour and shade associated with the BTS supporting these overlapping areas (yielding a darker image representation) identifies these areas as ones potentially with better coverage. Furthermore, an indication of the modes of operation available to wireless communication units in that area can be obtained, based on the particular colour shown in the respective areas. For example, if the first overlapping coverage area 315 exhibited an orange colour, by combining yellow and red transparencies, the network operator can readily determine that a subscriber unit in this area 315 is capable of being supported in a wide-area trunking mode or a no-trunking mode of operation, in the example scenario given.

The present invention has been described with respect to a private or public mobile radio (PMR) communication system, whereby provision of a variety of trunking types is supported by a number of BTS. However, it is envisaged that the inventive concepts described herein are applicable to any wireless cell-based communication system. The inventive concepts find particular benefit in wireless cell-based communication systems offering different modes of operation that affect the coverage area being supported, for example cellular communication systems at 850 MHz supporting a GSM system and at 1800/1900 MHz supporting a Personal Communication System (PCS)-based system.

Alternatively, the different modes of operation could relate to particular co-located BTSs (or Node Bs in UMTS parlance), where pico-cells, micro-cells and/or macrocell communications can be supported from a single site.

In this manner, the communication coverage provided close in to the site's centre would be indicated as better, due to that area being supported by two or three respective BTSs/Node Bs.

In order to respond quickly to BTS failures, it is within the contemplation of the invention that the network operator can adapt the performance or operational characteristics of working adjacent BTS, when a BTS failure is recognised. For example, with a real-time understanding of the impact on the system coverage due to the BTS failure, the network operator may adjust any adaptive antenna array of an adjacent BTS. In such a manner, the adjacent BTS may be able to increase its transmit power in the direction of the failed BTS, to minimise the impact on coverage loss, if the network operator so decided.

A skilled artisan would appreciate that alternative mechanisms could be used to minimise the impact on the overall system coverage when a BTS fails, and the above mechanism is an example of such a mechanism.

In a further embodiment of the present invention, it is envisaged that the initial coverage map may be/have been created to show the difference between portable and mobile coverage, for example based on transmit power. This means the coverage map of a single BTS would have (at least) two shades - one shade for both portable and mobile coverage (the area closest to the BTS) and another shade for the mobile coverage only (further away from the BTS). If the BTS fails then the colour would changes for the entire BTS - both portable and mobile coverage.

It will be understood that the coverage-based topology map described above provides the following advantages:
(i) The mechanism provides a real-time view of the actual coverage of a wireless telecommunication system, which previously was not possible.
(ii) A real-time coverage-based map of the current communication modes being supported within the wireless communication system can be readily presented to the network operator.
(iii) Existing coverage prediction tools, such as those offered by RF Consulting ™ and network management systems such as Fullvision ™ can be greatly improved using the inventive concepts described herein. These tools, when implementing the inventive concepts described above, will be able to provide the system operator with an ability to generate or view a real-time coverage topology map, based upon the operational status of a number or all of the system's BTSs.

Whilst specific, and preferred, implementations of the present invention are described above, it is clear that one skilled in the art could readily apply variations and modifications of such inventive concepts.

Thus, an improved coverage analysis mechanism has been described, particularly to address scenarios when there is system outage due to say, operational failure from a BTS serving communication unit, wherein the aforementioned disadvantages associated with prior art mechanisms have been substantially alleviated.

## Claims

1. A wireless cell-based communication system (100) comprising a plurality of wireless serving communication units (122-132) providing communication in respective overlapping coverage areas (315, 320, 325), the plurality of wireless serving communication units (122-132) being operably coupled by a management control function (146), wherein status report messages are obtained for a number of the wireless serving communication units (122-132) and are processed by the management control function (146), the communication system (100) including a coverage-based topology map generating function (159) that combines operational status information of said number of wireless serving communication units (122-132) with coverage information of said wireless serving communication units (122-132) to generate a composite coverage-based topology map, wherein the coverage-based topology map generating function (159) forms part of a management control function (146) and is operably coupled to a fault management application (157) for providing wireless serving communication unit fault data as part of the status information of said number of wireless serving communication units (122-132).

2. The communication system (100) according to Claim 1, wherein the combination of operational status information with coverage information is performed by overlaying shaded and/or coloured coverage areas of the respective wireless serving communication units (122-132) to generate the composite coverage-based topology map.

3. The communication system (100) according to Claim 2, wherein the shaded and/or coloured coverage areas of the respective wireless serving communication units (122-132) are substantially transparent, to facilitate the generation of a composite representation of the system coverage area with respect to overlapping areas (315, 320, 325).

4. The communication system (100) according to any one preceding Claim, wherein the coverage-based topology map generating function (159) forms part of the management control function (146) and is operably coupled to a fault management application (157) for providing wireless serving communication unit fault data as part of the status information of said number of wireless serving communication units (122-132).

5. The communication system (100) according to any one preceding Claim, wherein said coverage information relating to the wireless serving communication units (122-132) is obtained from a coverage prediction tool and overlaid over a geographical map of the area supported by the communication system.

6. The communication system (100) according to any one preceding one Claim, wherein said communication system is a Trunked radio communication system, where the status information includes an indication of any identified faults and/or a type of communication being supported by the respective wireless serving communication units (122-132) at a point in time.

7. The communication system (100) according to Claim 6, wherein said communication system complies with the TETRA standards.

8. A method for generating a composite coverage-based topology map of a wireless cell-based communication system having a plurality of wireless serving communication units (122-132) providing communication in respective overlapping coverage areas (315, 320, 325), the method comprising the steps of:
locating (230) a number of said wireless serving communication units (122-132) on a geographical map;
overlaying (280) a number of respective coverage maps associated with the wireless serving communication units (122-132);
adapting (240) a number of said respective coverage maps according to status information obtained from said wireless serving communication units (122-132) to generate a composite coverage-based topology map,
wherein the maps are produced by a topology map generating function (159) which forms part of a management control function (146) and is operably coupled to a fault management application (157) for providing wireless serving communication unit fault data as part of the status information of said number of wireless serving communication units (122-132).

9. The method for generating a composite coverage-based topology map according to Claim 8, wherein the steps of overlaying a number of respective coverage maps and adapting said maps includes the step of:
allocating a shade or colour to each map based on said status information obtained from said wireless serving communication units (122-132).

10. The method for generating a composite coverage-based topology map according to Claim 8 or Claim 9, further comprising the step of:
presenting said composite coverage-based topology map to a network operator in a substantially real-time such that the network operator can determine the operational status of the wireless communication system according to coverage.

11. A storage medium storing composite coverage-based topology map software for controlling a processor to perform the method of any one of Claims 8 to 10.

12. A composite coverage-based topology map generation application (159) for use in a wireless cell-based communication system (100), where the composite coverage-based topology map generation application combines operational status information of a number of wireless serving communication units (122-132) with coverage information of said wireless serving communication units (122-132) to generate a composite coverage-based topology map,wherein the coverage-based topology map generating function (159) forms part of a management control function (146) and is operably coupled to a fault management application (157) for providing wireless serving communication unit fault data as part of the status information of said number of wireless serving communication units (122-132).
